# EUROPÄISCHE PATENTANMELDUNG

(11) **EP 1 281 585 A1**
(43) Veröffentlichungstag der Anmeldung: **05.02.2003**
(21) Anmeldenummer: 02015321.9
(22) Anmeldetag: 10.07.2002
(51) Int. Cl.: B60R 21/20, B60N 2/42, B60N 2/48

(54) **Anordnung eines Fahrzeugsitzes in einem Fahrzeug**

(30) Priorität: 02.08.2001 DE 10137825
(71) Anmelder: DaimlerChrysler AG, 70567 Stuttgart (DE)
(72) Erfinder: Bossenmaier, Alban, 71126 Gäufelden-Nebringen (DE); Hensel, Jörg, 71069 Sindelfingen (DE); Maly, Peter, 72184 Eutingen im Gäu (DE)

(57) **Zusammenfassung**

Es wird eine Anordnung eines Fahrzeugsitzes (1) in einem Fahrzeug vorgeschlagen, wobei zwischen dem Fahrzeugsitz (1) und einer angrenzenden Seitenwand (2) des Fahrzeugs ein Expansionsbereich eines Seitenairbagmoduls (6) vorgesehen ist. Erfindungsgemäß sind der Fahrzeugsitz (1) und die angrenzende Seitenwand (2) des Fahrzeuges derart zueinander angeordnet, daß ein auf dem Fahrzeugsitz (1) befindlicher Insasse wenigstens in seinem Kopfbereich (4,5) durch Elemente (3,9) des Fahrzeugsitzes (1) und/oder der Seitenwand (2) auf einen Mindestabstand (A) zu einer Austrittsöffnung des Seitenairbagmoduls (6) gehalten wird.

## Beschreibung

Die vorliegende Erfindung bezieht sich auf eine Anordnung eines Fahrzeugsitzes in einem Fahrzeug, wobei zwischen dem Fahrzeugsitz und einer angrenzenden Seitenwand des Fahrzeugs ein Expanisionsbereich eines Seitenairbagsmoduls vorgesehen ist.

Waren vor einiger Zeit Airbags noch besondere Ausstattungsmerkmale von Kraftfahrzeugen, insbesondere der gehobenen Fahrzeugklassen, so ist es heute üblich, daß auch bei kleineren Fahrzeugen mindestens ein Airbag, nämlich ein Frontairbag im Lenkradbereich und gegebenenfalls ein Beifahrer-Frontairbag zur Serienausstattung gehört.

In zunehmendem Maße trifft dies auch für Seitenairbags zu, bei denen es sich ebenfalls um einem jeweiligen Fahrzeugsitz zugeordnete passive Rückhaltekomponenten handelt, wobei ein Airbag auf ein Auslösesignal hin schlagartig mit Gas gefüllt wird, um die auf dem jeweiligen Fahrzeugsitz sitzende Person im Falle eines Aufpralls oder sonstigen Unfalles im Fahrzeug zu schützen.

In der Praxis ist es allgemein üblich, einen Fahrzeugsitz dergestalt bereitzustellen, daß eine Sitzlehne wenigstens in Vorwärtsfahrtrichtung nach vorne gesehen ein Polster aufweist, welches von einem Bezug umschrankt ist. Der Bezug läuft dabei um die in der Sitzlehne angeordnete Sitzstruktur sowie gegebenenfalls um ein im Bereich dieser Sitzstruktur angeordnetes Seitenairbagmodul. Die Sitzstruktur dient dabei zur Stabilisierung der Sitzlehne und besteht üblicherweise aus einem profilierten Blech.

Das Seitenairbagmodul umfaßt üblicherweise, wie auch die anderen Airbags, einen Gasgenerator sowie einen Gassack. Wird das Modul ausgelöst, so produziert der sensorgesteuerte Gasgenerator ein Gas, mit welchem der Gassack in kurzer Zeit von ca. 10 bis 30 Millisekunden befüllt wird, so daß zum Schutz des Insassen ein ballonartiges Schutzkissen gebildet wird.

In der deutschen Patentschrift DE 196 05 621 wird ein in einem Fahrzeug in dessen Fahrtrichtung angeordneter Fahrzeugsitz mit einer Sitzfläche und einer Sitzlehne beschrieben. Im Bereich der in Fahrtrichtung gesehen nach außen weisenden Stirnseite der Sitzlehne ist ein Seitenairbagmodul mit einem mittels eines von einem Gasgenerator erzeugten Gases aufblasbaren Gassack integriert. Die Sitzlehne ist zumindest im Bereich ihrer Stirnfläche im wesentlichen auf ihrer gesamten Länge mit Hilfe einer profilierten Sitzstruktur aus steifem Material längsstabilisiert. Es wird dabei in diesem Dokument vorgeschlagen, daß wenigstens ein Profilschenkel der Sitzstruktur so ausgebildet und angeordnet ist, daß er das Seitenairbagmodul in Fahrtrichtung gesehen seitlich nach außen hin, außer im Bereich einer Durchbrechung für den Durchtritt des Gassackes, vollständig abdeckt.

Darüber hinaus ist aus der europäischen Patentanmeldung EP 0 788 941 eine Sitzstruktur bekannt, die einen Seitenairbag aufweist. Dabei weist der Sitzrückenrahmen Seitenrahmen auf, die an den jeweiligen Seiten des Fahrzeugsitzes geschaffen sind.

Ein den Airbag aufnehmender konkaver Abschnitt wird an einem der Seitenrahmen gebildet, der einer Fahrzeugtür zugewandt ist, so daß sich der konkave Abschnitt im Seitenrahmen einwärts von einem Endabschnitt des Sitzrückenrahmens der Breite nach in Richtung des Sitzes erstreckt. Der den Airbag aufnehmende konkave Abschitt nimmt einen Gasgenerator und einen zusammengefalteten Airbag auf. Ein Sitzpolster wird zum Bedecken des Sitzrückenrahmens bereitgestellt und eine Sitzoberflächenschicht wird zum Bedecken des Sitzpolsters bereitgestellt. Die Sitzoberflächenschicht dient zum Bedecken des den Airbag aufnehmenden konkaven Abschnitt und des Sitzpolsters.

Darüber hinaus ist es aus der Praxis ebenso bekannt, insbesondere bei Cabriolets oder Coupés in einem Bereich neben dem Sitz, insbesondere auf der der Fahrzeugtüre zugewandten Seite, einen Airbag im Bereich hinter der Innenraumverkleidung bereitzustellen.

Bei allen diesen aus dem Stand der Technik bekannten Seitenairbags, die seitlich im Fahrzeugsitz oder seitlich des Fahrzeugsitzes untergebracht sind, hat es sich als nachteilig erwiesen, daß sich der auf dem Sitz befindliche Insasse eventuell direkt an einer Austrittsöffnung des Airbagmoduls befinden kann, wenn er sich nicht in einer "Soll-Position" auf einem Sitzspiegel des Fahrzeugsitzes befindet.

Beispielsweise kann sich ein Fahrgast in solch einem sogenannten "out-of-position"-Zustand befinden, wenn er mit rückwärts gewendetem Kopf seitlich des Sitzes nach einem Gegenstand im rückwärtigen Bereich des Fahrzeugsitzes greift. In einem derartigen Zustand kann der Insasse durch einen sich im Gefahrenfall aufblasenden Airbag in nicht unerheblichem Ausmaß beeinträchtigt werden, indem z.B. sein Kopf durch den sich öffnenden Airbag angeschossen wird.

Es ist daher Aufgabe der vorliegenden Erfindung, eine Anordnung für einen Fahrzeugsitz in einem Fahrzeug bereitzustellen, mit der eine Beeinträchtigung des Insassen beim Aufblasen eines Seitenairbags auch dann vermindert oder sogar vermieden werden kann, wenn sich der Insasse in einem sogenannten "outof-position"-Zustand und nicht in der üblichen "Soll-Position" befindet.

Diese Aufgabe wird mit einer erfindungsgemäßen Anordnung eines Fahrzeugsitzes in einem Fahrzeug entsprechend den kennzeichnenden Merkmalen des Patentanspruches 1 gelöst.

Die erfindungsgemäße Anordnung, bei der der Fahrzeugsitz und die angrenzende Seitenwand des Fahrzeuges derart zueinander angeordnet sind, daß ein auf dem Fahrzeugsitz befindlicher Insasse wenigstens in seinem Kopfbereich durch Elemente des Fahrzeugsitzes und/oder der Seitenwand auf einen Mindestabstand zu einer Austrittsöffnung des Seitenairbagmoduls gehalten wird, bietet den Vorteil, daß der Insasse bei einem Öffnen des Airbags von diesem nicht direkt "angeschossen" werden kann. Stattdessen wird der Fahrzeuginsasse immer auf einen Mindestabstand zu der Austrittsöffnung des Airbags gehalten, welcher vorzugsweise derart gewählt wird, daß der Passagier selbst bei einer Kontaktierung des Airbags mit dem Kopf nur unschädlich von dem Airbag getroffen wird.

Eine solche Anordnung hat sich insbesondere für einen "out-of-position"-Zustand des betroffenen Insassen als vorteilhaft gezeigt, da sich im Fahrzeug befindliche Insassen nicht immer in der sogenannten "Soll-Position" befinden, sondern sich auch häufiger mal zur Seite lehnen, wie dies insbesondere bei Kindern der Fall ist.

Daneben ist es jedoch ebenso möglich, daß der sich auf dem Fahrzeugsitz befindliche Insasse beispielsweise durch eine starke Kurvenlage des Fahrzeuges in einen sogenannten "out-of-position"-Zustand gelangt und in eine Position kommt, in der er sich genau in dem bzw. vor dem Bereich des Seitenairbags befindet. Eine solche Situation ist auch häufig gegeben, wenn das Fahrzeug schon vor dem Auslösen des Airbags in einen kritischen Fahrzustand gerät.

Für den Fachmann ist es dabei offensichtlich, daß sich der Fahrzeugsitz und die Seitenwand des Fahrzeuges immer so zueinander erstrecken sollten, daß das Öffnen des Airbags nicht behindert wird, um durch den Seitenairbag im Gefahrenfalle auch einen wirksamen Schutz bieten zu können.

Weitere Vorteile und Ausgestaltungen der Erfindung ergeben sich aus den weiteren Patentansprüchen und dem nachfolgend anhand der Zeichnung beschriebenen bevorzugten Ausführungsbeispiel.

Es zeigt hierbei:
- Fig. 1: eine Ansicht von oben auf einen Fondbereich eines Fahrzeugs gemäß dem Stand der Technik, und
- Fig. 2: eine Ansicht von oben auf einen Fondbereich eines Fahrzeuges gemäß einer Ausführungsform der vorliegenden Erfindung.

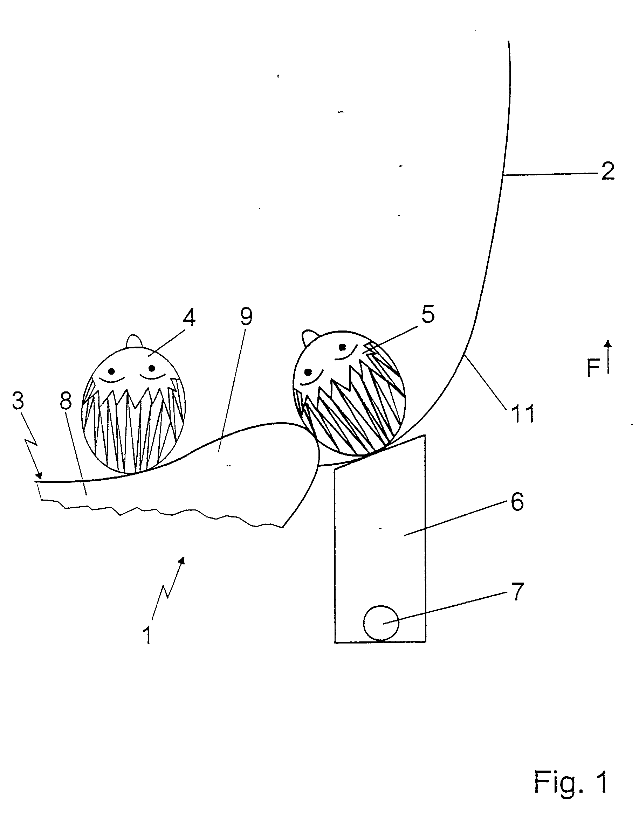

In Fig. 1 ist der Fondbereich eines Kraftfahrzeuges dargestellt, wobei durch den Pfeil F die Vorwärtsfahrtrichtung des Fahrzeuges dargestellt ist, so daß es sich hierbei um einen Ausschnitt aus dem in Vorwärtsfahrtrichtung gesehen hinteren, rechten Teil des Fahrzeuges handelt.

In dieser Ansicht ist zu erkennen, daß ein Fahrzeugsitz 1 mit Abstand zu einer Seitenwand 2 bzw. seitlichen Innenverkleidung des Fahrzeuges angeordnet ist, wobei zwischen einem Sitzpolster 3 des Fahrzeugsitzes 1 und der Seitenwand 2 ein Expansionsbereich eines Seitenairbagmoduls 6 vorgesehen ist, welches in der gezeigten Ausführung in einer Rückwand 11 der Innenverkleidung des Fahrzeuges integriert ist.

Das Seitenairbagmodul 6 ist von an sich bekannter Bauart und weist einen Gassack auf, der durch einen Gasgenerator 7 im Crash-Fall entfaltbar ist.

Ein Kopf 4 zeigt einen Insassen auf dem Fahrzeugsitz 1, welcher sich in einer Soll-Position auf einem Sitzspiegel 8 des Fahrzeugsitzes 1 befindet, wobei der Fahrzeuginsasse in diesem Zustand durch seitliche Wangen 9 des Fahrzeugsitzes 1 stabilisiert wird, da diese Wangen 9 den Kopf 4 auch bei stärkeren Kurvenbewegungen im Bereich des Fahrzeugsitzes 1 halten.

Daneben ist mit dem Bezugszeichen 5 eine weitere Kopfstellung des Fahrzeuginsassen gezeigt, wobei er sich hier in einem sogenannten "out-of-position"-Zustand befindet, die bei Fondsitzen insbesondere häufig bei Kindern vorkommt, wenn sie beim Betrieb des Fahrzeuges nicht ruhig auf dem Fahrzeugsitz 1 bleiben.

Kommt nun der Airbag des Airbagmoduls 6 in einem Gefahrenfall zur Auslösung, indem der durch einen Sensor gesteuerte Generator 7 den Gassack aufbläst, so tritt der Airbag genau an der Stelle aus der Verkleidung bzw. der Rückwand 11 heraus, wo sich der Kopf 5 des Insassen in einem "out-of-position"-Zustand befindet, und katapultiert so den Kopf 5 des Insassen nach vorne.

Dies kann zu starken Beeinträchtigungen des Insassen führen, die gemäß der vorliegenden Erfindung zumindest verringert werden sollen.

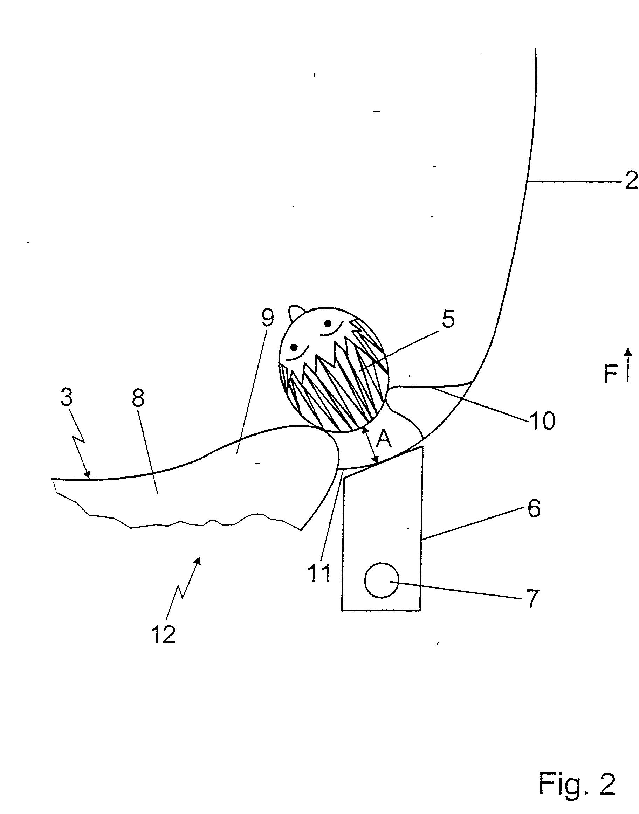

In Fig. 2 ist nun ein der Fig. 1 entsprechender Ausschnitt aus einem Fondbereich eines Fahrzeuges gemäß einer bevorzugten Ausführungsform der vorliegenden Erfindung gezeigt. Hierbei ist ein in einem Fahrzeug, und zwar im Fondbereich oder in einem zweisitzigen Cabriolet oder Coupé angeordneter Fahrzeugsitz 1 ersichtlich, wobei in der Draufsicht nur eine Sitzlehne dargestellt ist. Auch hier ist seitlich des Fahrzeugsitzes 1 ein Expansionsbereich eines Seitenairbagmoduls 6 mit einem mittels eines Gasgenerators 7 aufblasbaren Gassack vorgesehen, wozu der Fahrzeugsitz 1 zu der Seitenwand 2 des Fahrzeuges auf Abstand angeordnet ist.

Der Fahrzeugsitz 1 und die Seitenwand 2 des Fahrzeuges sind dabei derart gestaltet, daß ein auf dem Fahrzeugsitz befindlicher Insasse auch in einem mit der Kopfstellung 5 wiedergegebenen "out-of-position"-Zustand stets auf einem Mindestabstand A zu einer Austrittsöffnung des Seitenairbagmoduls 6 gehalten wird. In der in Fig. 2 gezeigten Ausführung ist die Austrittsöffnung des Seitenairbagmoduls 6 in der Rückwand 11 der Fahrzeuginnenverkleidung angeordet, weshalb der Fahrzeuginsasse zu dieser auf Abstand gehalten werden muß.

Um ein Anlehnen des Fahrzeuginsassen mit seinem Kopf 5 an die Austrittsöffnung des Seitenairbagmoduls 6 zu verhindern, ist die Rückenlehne bzw. das Sitzpolster 3 mit der seitlichen Wange 9 derart nach außen gezogen, daß sie im Zusammenwirken mit einer nockenartigen Ausformung 10 an der Seitenwand 2 des Fahrzeuges einen so geringen Zwischenraum einschließt, daß dieser ein Durchtreten des Insassenkopfes 5 in Richtung des Seitenairbagmoduls 6 verhindert.

Damit kann der Insassenkopf 5 auch in einem "out-of-position"-Zustand nicht direkt auf die Rückwand 11 der Fahrzeuginnenverkleidung im Bereich des Airbagmoduls auftreffen, da der verbleibende Durchlaß zu klein ist. Dieser geringe Durchlaß sollte zumindest auf der Höhe des Airbagmoduls vorgesehen sein, wobei jedoch nichts dagegen spricht, den Fahrzeugsitz 1 auch so zu gestalten, daß sich der geringe Abstand zur Seitenwand 2 über die gesamte Höhe des Fahrzeugsitzes 1 erstreckt.

Daneben wäre es jedoch durchaus auch denkbar, daß nur der Fahrzeugsitz 1 eine entsprechend große Wange 9 aufweist, um den Abstand zur Seitenwand 2 derart gering zu gestalten, daß ein Insasse im Bereich des Airbagmoduls nicht mehr an die Rückwand 11 gelangen kann, oder daß die Wange 9, wie aus dem Stand der Technik bekannt ist, üblich ausgebildet wird und dafür nur die nockenartige Ausformung 10 an der Seitenverkleidung des Fahrzeuginnenraumes derart gebildet wird, daß wiederum der Kopf 5 des Insassen nicht auf die Rückwand 11 gelangen kann.

Es versteht sich von selbst, daß für den Fall, daß das Airbagmodul 6 nicht im Bereich hinter der Rückwand 11 angeordnet ist, sondern wie beispielsweise bei Vordersitzen in einem seitlichen Bereich des Fahrzeugsitzes 1 selbst angeordnet ist, der Fahrzeugsitz 1 und die Seitenwand 2 derart ausgebildet sein sollten, daß der Insasse mit Abstand zu diesem Bereich angeordnet ist.

Gemäß einer besonders bevorzugten Ausführungsform der vorliegenden Erfindung ist der Fahrzeugsitz 1 des Fahrzeuges derart gestaltet, daß sich das Sitzpolster 3 des Fahrzeugsitzes 1 derart in Richtung der Seitenwand 2 erstreckt, daß eine Normkugel mit einem Durchmesser von etwa 15 cm immer mindestens mit einem Abstand von 35 mm zu dem Seitenairbagmodul 6 angeordnet ist. Gemäß einer weiteren bevorzugten Ausführungsform der vorliegenden Erfindung erstreckt sich die Seitenwand 2 derart in Richtung der Sitzlehne 3, daß eine Normkugel mit einem Durchmesser von 15 cm nicht durch den Zwischenraum hindurchtreten kann. Die Normkugel entspricht dabei einer Kopfgröße, wobei vorzugsweise ein Kopfdurchmesser eines kleinen Kindes zur Dimensionierung herangezogen werden sollte.

Mit der beschriebenen Anordnung kann somit auch verhindert werden, daß ein Kleinkind auf dem Fahrzeugsitz, das sich in einem sogenannten "out-of-position"-Zustand befindet, beeinträchtigt wird, wenn sich in einer Gefahrensituation der Seitenairbag öffnet und in Richtung des sensiblen Kopfes expandiert.

Die genannten Maße für die Normkugel und den gewählten Mindestabstand A sollen hier nur beispielhaft angeführt sein. Im allgemeinen sind diese Abmessungen jedoch abhängig von dem Fahrzeug, in das der Fahrzeugsitz 1 eingesetzt wird, und insbesondere auch von der Art und der Anordnung des Airbags, der verwendet wird.

In der vorliegend gezeigten Ausführungsform gemäß Fig. 2 ist das Airbagmodul 6 seitlich des Fahrzeugsitzes 3 im Fondbereich in einem zweisitzigen Cabriolet oder einem Coupé angeordnet, wo die Seitenverkleidung 2 direkt in die Rückwand 11 übergeht und mehr oder weniger an einer Seite eines Fahrzeugsitzes 1 abschließt.

Darüber hinaus ist es jedoch ebenso denkbar, daß der Seitenairbag auch im Fahrzeugsitz 1 selbst untergebracht ist. Solche im Fahrzeugsitz 1 untergebrachten Airbagmodule 6 sind dem Fachmann aus dem Stand der Technik hinreichend bekannt, weshalb hier auf deren genaue mögliche Anordnung nicht näher eingegangen werden soll.

Die bisher im Zusammenhang mit der gezeigten bevorzugten Ausführungsform beschriebene Anordnung muß nicht zwangsläufig so gewählt werden, vielmehr ist es beispielsweise durchaus auch möglich, daß es sich dabei um einen Fahrzeugsitz 1 im Frontbereich handelt, der im wesentlichen symmetrisch ausgebildet ist und bei dem in den beiden Seitenbereichen des Fahrzeugsitzes 1 jeweils Seitenairbagmodule 6 untergebracht sind.

Dabei erscheint es dem Fachmann mit Hilfe dieser Lehre offensichtlich, daß dann bei einer solchen Ausführungsform der vorliegenden Erfindung nicht nur der Abstand zwischen Seitenwand 2 und angrenzendem Fahrzeugsitz 1 verkleinert werden soll, sondern auch der Abstand zwischen den beiden nebeneinander liegenden Sitzen so klein gewählt werden soll, daß der Kopf eines Insassen immer mit Abstand zu dem wo auch immer angeordneten Seitenairbagmodul 6 gehalten wird.

## Patentansprüche

1. Anordnung eines Fahrzeugsitzes in einem Fahrzeug, wobei zwischen dem Fahrzeugsitz und einer angrenzenden Seitenwand des Fahrzeugs ein Expansionsbereich eines Seitenairbagmoduls vorgesehen ist,
**dadurch gekennzeichnet,**
**daß** der Fahrzeugsitz (1) und die angrenzende Seitenwand (2) des Fahrzeuges derart zueinander angeordnet sind, daß ein auf dem Fahrzeugsitz (1) befindlicher Insasse wenigstens in seinem Kopfbereich (4, 5) durch Elemente (3, 9) des Fahrzeugsitzes (1) und/oder der Seitenwand (2) auf einen Mindestabstand (A) zu einer Austrittsöffnung des Seitenairbagmoduls (6) gehalten wird.

2. Anordnung nach Anspruch 1,
**dadurch gekennzeichnet,**
**daß** sich eine Sitzlehne des Fahrzeuges (1) zumindest teilweise soweit in Richtung einer Seitenverkleidung der Seitenwand (2) erstreckt, daß ein sich auf dem Fahrzeugsitz (1) befindlicher Insasse immer mit dem Mindestabstand (A) zu dem Seitenairbagmodul (6) gehalten wird.

3. Anordnung nach Anspruch 1,
**dadurch gekennzeichnet,**
**daß** sich eine Seitenverkleidung der Seitenwand (2) zumindest teilweise soweit in Richtung einer Sitzlehne des Fahrzeugsitzes (1) erstreckt, daß ein sich auf dem Fahrzeugsitz (1) befindlicher Insasse immer mit dem Mindestabstand (A) zu dem Seitenairbagmodul (6) gehalten wird.

4. Anordnung nach Anspruch 1,
**dadurch gekennzeichnet,**
**daß** der Fahrzeugsitz (1) und die Seitenwand (2) derart zueinander beabstandet sind, daß eine eine Kopfgröße repräsentierende Normkugel (4, 5) auf den Mindestabstand (A) zu der Austrittsöffnung des Seitenairbagmoduls (6) gehalten wird.

5. Anordnung nach Anspruch 4,
**dadurch gekennzeichnet,**
**daß** die Normkugel einen Durchmesser von wenigstens 15 cm aufweist.

6. Anordnung nach Anspruch 1,
**dadurch gekennzeichnet,**
**daß** das Seitenairbagmodul (6) seitlich in dem Fahrzeugsitz (1) angeordnet ist.

7. Anordnung nach Anspruch 1,
**dadurch gekennzeichnet,**
**daß** das Seitenairbagmodul (6) zwischen dem Fahrzeugsitz (1) und einer Seitenverkleidung der Seitenwand (2) angeordnet ist.
